# EUROPEAN PATENT APPLICATION

(11) **EP 3 309 365 A1**
(43) Date of publication of application: **18.04.2018**
(21) Application number: 17195082.7
(22) Date of filing: 05.10.2017
(51) Int. Cl.: F01D 17/16, F02C 6/12

(54) **VARIABLE-NOZZLE TURBOCHARGER WITH COMPOSITE HEAT SHROUD**

(30) Priority: 12.10.2016 US 201615291076
(71) Applicant: Honeywell International Inc., Morris Plains, NJ 07950 (US)
(72) Inventor: MASA, Bohuslav, Morris Plains, NJ New Jersey 07950 (US); MACHALINEK, Jan, Morris Plains, NJ New Jersey 07950 (US); MICANEK, Vit, Morris Plains, NJ New Jersey 07950 (US)
(74) Representative: Houghton, Mark Phillip

(57) **Abstract**

A turbocharger (10) includes a variable-nozzle turbine having a variable vane assembly formed as a cartridge (50). A pipe-shaped insert (52) of the cartridge fits into an axial bore (32) in the turbine housing (24). The variable vane assembly includes a nozzle ring (38) to which the variable vanes (34) are mounted. A composite heat shroud (80) is disposed between and axially compressed between the turbocharger's center housing (20) and the nozzle ring (38). The heat shroud (80) is constructed such that heating of the shroud causes the shroud to deform so as to increase the axial preload exerted by the shroud. In one embodiment the heat shroud is a two-layer structure in which the two layers are formed of different materials having different coefficients of thermal expansion.

## Description

### BACKGROUND OF THE INVENTION

The present invention relates to turbochargers having a variable-nozzle turbine in which an array of movable vanes is disposed in the nozzle of the turbine for regulating exhaust gas flow into the turbine.

An exhaust gas-driven turbocharger is a device used in conjunction with an internal combustion engine for increasing the power output of the engine by compressing the air that is delivered to the air intake of the engine to be mixed with fuel and burned in the engine. A turbocharger comprises a compressor wheel mounted on one end of a shaft in a compressor housing and a turbine wheel mounted on the other end of the shaft in a turbine housing. Typically the turbine housing is formed separately from the compressor housing, and there is yet another center housing connected between the turbine and compressor housings for containing bearings for the shaft. The turbine housing defines a generally annular chamber that surrounds the turbine wheel and that receives exhaust gas from an engine. The turbine assembly includes a nozzle that leads from the chamber into the turbine wheel. The exhaust gas flows from the chamber through the nozzle to the turbine wheel and the turbine wheel is driven by the exhaust gas. The turbine thus extracts power from the exhaust gas and drives the compressor. The compressor receives ambient air through an inlet of the compressor housing and the air is compressed by the compressor wheel and is then discharged from the housing to the engine air intake.

One of the challenges in boosting engine performance with a turbocharger is achieving a desired amount of engine power output throughout the entire operating range of the engine. It has been found that this objective is often not readily attainable with a fixed-geometry turbocharger, and hence variable-geometry turbochargers have been developed with the objective of providing a greater degree of control over the amount of boost provided by the turbocharger. One type of variable-geometry turbocharger is the variable-nozzle turbocharger (VNT), which includes an array of variable vanes in the turbine nozzle. The vanes are pivotally mounted in the nozzle and are connected to a mechanism that enables the setting angles of the vanes to be varied. Changing the setting angles of the vanes has the effect of changing the effective flow area in the turbine nozzle, and thus the flow of exhaust gas to the turbine wheel can be regulated by controlling the vane positions. In this manner, the power output of the turbine can be regulated, which allows engine power output to be controlled to a greater extent than is generally possible with a fixed-geometry turbocharger.

The variable vane mechanism is relatively complicated and thus presents a challenge in terms of assembly of the turbocharger. Furthermore, the mechanism is located between the turbine housing, which gets quite hot because of its exposure to exhaust gases, and the center housing, which is at a much lower temperature than the turbine housing. Accordingly, the variable vane mechanism is subject to thermal stresses because of this temperature gradient.

The assignee of the present application has previously addressed the issues noted above by providing a variable-nozzle turbocharger (VNT) that includes a cartridge containing the variable vane mechanism, as described in U.S. Patent No. 7,559,199 assigned to the assignee of the present application. The turbine defines a nozzle through which exhaust gas is delivered to the turbine wheel, and a central bore through which exhaust gas is discharged after it passes through the turbine wheel. The cartridge is connected between the center housing and the turbine housing and comprises an assembly of a generally annular nozzle ring and an array of vanes circumferentially spaced about the nozzle ring and rotatably mounted to the nozzle ring and connected to a rotatable actuator ring such that rotation of the actuator ring rotates the vanes for regulating exhaust gas flow to the turbine wheel. The cartridge also includes an insert having a tubular portion sealingly received into the bore of the turbine housing and having a nozzle portion extending generally radially out from one end of the tubular portion, the nozzle portion being axially spaced from the nozzle ring such that the vanes extend between the nozzle ring and the nozzle portion. A plurality of spacers are connected between the nozzle portion of the insert and the nozzle ring for securing the nozzle ring to the insert and maintaining an axial spacing between the nozzle portion of the insert and the nozzle ring. The turbine housing includes a surface that directly contacts a surface of the nozzle ring that axially faces toward the insert for axially locating the nozzle ring relative to the turbine housing and for sealing the interface between the nozzle ring and turbine housing. The nozzle ring is structured and arranged relative to the center housing such that radial locating of the nozzle ring is performed by the center housing, or by a member arranged intermediate the nozzle ring and center housing.

In accordance with the '199 patent, a heat shroud is captively retained between the nozzle ring and the center housing when the cartridge is installed onto the center housing. The heat shroud provides sealing between the nozzle ring and center housing to prevent hot exhaust gas from migrating between these parts into the cavity in which the vane arms and unison ring are disposed. The heat shroud can comprise a generally annular member formed of a resiliently elastic material, and the shroud is configured so that it is compressed in the axial direction between the nozzle ring and the center housing so that the restoring force of the shroud urges the shroud firmly against surfaces of the nozzle ring and center housing to substantially seal against these surfaces. The heat shroud has a radially outer portion that engages a surface of the nozzle ring that faces axially toward the center housing, and a radially inner portion that engages a surface of the center housing that faces axially toward the nozzle ring. These surfaces of the nozzle ring and center housing compress and elastically deform the heat shroud between them.

The cartridge described in the aforementioned '199 patent is effective for providing stress decoupling of the variable vane mechanism. However, further improvements are sought.

### BRIEF SUMMARY OF THE INVENTION

The present invention addresses the above needs and achieves other advantages, by providing an improved heat shroud for the variable-nozzle cartridge. In accordance with an embodiment described herein, a turbocharger comprises a turbine housing defining a nozzle through which exhaust gas is delivered to the turbine wheel, and a central bore through which exhaust gas is discharged after it passes through the turbine wheel. The cartridge is connected between the center housing and the turbine housing and comprises an assembly of a generally annular nozzle ring and an array of vanes circumferentially spaced about the nozzle ring and rotatably mounted to the nozzle ring and connected to a rotatable actuator ring such that rotation of the actuator ring rotates the vanes for regulating exhaust gas flow to the turbine wheel. The cartridge includes an insert having a tubular portion sealingly received in the bore of the turbine housing and having a nozzle portion extending generally radially out from one end of the tubular portion, the nozzle portion being axially spaced from the nozzle ring such that the vanes extend between the nozzle ring and the nozzle portion, and a plurality of spacers connected between the nozzle portion of the insert and the nozzle ring for securing the nozzle ring to the insert and maintaining an axial spacing between the nozzle portion of the insert and the nozzle ring. A heat shroud is disposed between the center housing and the nozzle ring and is axially compressed so as to exert a biasing force urging the nozzle ring away from the center housing.

The present disclosure particularly addresses an issue with the axially compressed heat shroud. The shroud plays a crucial role in holding the VNT cartridge in the proper position. When the preload of the shroud is lost due to thermal/vibration effects, the system becomes unstable and the VNT mechanism does not operate in an optimal condition. The cartridge can become loose and start to vibrate, which can lead to wear and sticking between the vanes and the nozzle ring. The main problem of the conventional shroud is that because of high temperatures the shroud expands and the preload is completely lost. The design of the shroud is also limited by the construction of the VNT mechanism when limited space is available. Prior to the present invention, extensive work was carried out in order to optimize the shape of the shroud; nevertheless the effect of the loss of the preload was not satisfactorily eliminated.

In accordance with the present disclosure, a composite heat shroud is employed. The composite shroud uses high temperature as an advantage. The composite construction of the shroud is such that when heat is delivered to the shroud, the shroud deforms in such a manner that preload of the shroud increases. In one embodiment the shroud comprises a two-layer structure wherein the two layers are formed of different materials. Similar in principle to a bi-metallic strip, the shroud upon heating deforms in such a way as to increase the preload on the shroud. The noted problems caused by loss of preload are thereby avoided or substantially mitigated.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is an axial cross-sectional view of a turbocharger in accordance with an embodiment of the invention;
FIG. 2 is a plan view of the composite heat shroud in accordance with an embodiment of the invention;
FIG. 3 is a cross-sectional view on line 3-3 in FIG. 2; and
FIG. 4 is an enlarged portion of FIG. 3 to show the two-layer construction of the composite heat shroud.

### DETAILED DESCRIPTION OF THE DRAWINGS

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

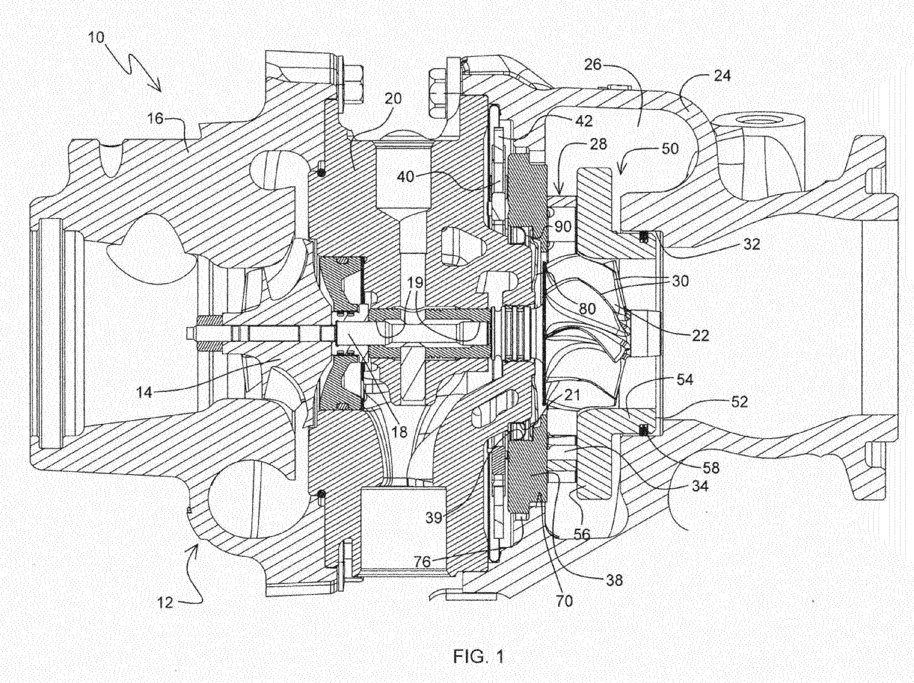

A turbocharger 10 in accordance with one embodiment of the invention is illustrated in fragmentary perspective view in FIG. 1. The turbocharger comprises a compressor 12 having a compressor wheel or impeller 14 mounted in a compressor housing 16 on one end of a rotatable shaft 18. The shaft is supported in bearings 19 mounted in a center housing 20 of the turbocharger. The shaft 18 is rotated by a turbine wheel 22 mounted on the other end of the shaft 18 from the compressor wheel, thereby rotatably driving the compressor wheel, which compresses air drawn in through the compressor inlet and delivers the compressed air to the intake of an internal combustion engine (not shown) for boosting the performance of the engine.

The turbocharger also includes a turbine housing 24 that houses the turbine wheel 22. The turbine housing defines a generally annular chamber 26 that surrounds the turbine wheel and that receives exhaust gas from the internal combustion engine for driving the turbine wheel. The exhaust gas is directed from the chamber 26 generally radially inwardly through a turbine nozzle 28 to the turbine wheel 22. As the exhaust gas flow through the passages between the blades 30 of the turbine wheel, the gas is expanded to a lower pressure, and the gas discharged from the wheel exits the turbine housing through a generally axial bore 32 therein.

The turbine nozzle 28 is a variable nozzle for varying the cross-sectional flow area through the nozzle so as to regulate flow into the turbine wheel. The nozzle includes a plurality of vanes 34 that are circumferentially spaced about the nozzle. Each vane is affixed to a pin (not visible in FIG. 1) that passes through an aperture in a generally annular nozzle ring 38 that is mounted coaxially with respect to the turbine wheel 22. Each pin is rotatable about its axis within the associated aperture in the nozzle ring so that the vane can rotate about the axis for varying the setting angle of the vane. The nozzle ring 38 forms one wall of the flow passage of the nozzle 28. Each of the pins has a vane arm 40 affixed to an end of the pin that protrudes out from the nozzle ring 38, and is engaged by a generally annular unison ring 42 (also referred to herein as an actuator ring) that is rotatable about its axis and that is coaxial with the nozzle ring 38. An actuator (not shown) is connected to the unison ring 42 for rotating it about its axis. When the unison ring is rotated, the vane arms 40 are rotated to cause the pins to rotate about their axes, thereby rotating the vanes 34 so as to adjust the vane setting angles and thereby vary the cross-sectional flow area through the nozzle 28.

With reference again to FIG. 1, the variable vane mechanism is provided in the form of a cartridge 50 that is installable into and removable from the turbocharger as a unit. The cartridge 50 comprises the nozzle ring 38, vanes 34, pins, vane arms 40, and unison ring 42. The cartridge further comprises an insert 52 that has a tubular portion 54 sealingly received into the bore 32 of the turbine housing, and a nozzle portion 56 extending generally radially out from one end of the tubular portion 54, the nozzle portion 56 being axially spaced from the nozzle ring 38 such that the vanes 34 extend between the nozzle ring 38 and the nozzle portion 56. The radially outer surface of the tubular portion 54 has at least one circumferential groove, and preferably has two axially spaced grooves, in each of which a sealing ring 58 is retained for sealingly engaging the inner surface of the bore 32. Advantageously, the outer diameter of the tubular portion 54 of the insert is slightly less than the inner diameter of the bore 32 so that a slight gap is defined therebetween, and only the sealing rings 58 make contact with the inner surface of the bore 32. Additionally, there is a gap between the nozzle portion 56 and the adjacent end of the turbine housing at the end of the bore 32. In this manner, the insert 52 is mechanically and thermally decoupled from the turbine housing 24.

A plurality of spacers (not shown) are connected between the nozzle portion 56 of the insert 52 and the nozzle ring 38 for securing the nozzle ring to the insert and maintaining the desired axial spacing between the nozzle portion of the insert and the nozzle ring. Each spacer passes through an aperture in the nozzle portion 56 and has an enlarged head on the side of the nozzle portion 56 that faces away from the nozzle 28. Each spacer also has a pair of enlarged shoulders axially spaced along the length of the spacer such that one shoulder abuts the opposite side of the nozzle portion 56 and the other shoulder abuts the facing surface of the nozzle ring 38, thereby setting the axial spacing between the nozzle ring and nozzle portion. An end portion of each spacer passes through an aperture in the nozzle ring 38 and the distal end of this end portion is upset to form an enlarged head to capture the nozzle ring. Advantageously, the spacers are formed of a material having good high-temperature mechanical properties and a relatively low thermal conductivity, such as stainless steel (e.g., grade 310 stainless steel) or the like, so that the nozzle ring 38 and insert 52 are effectively thermally decoupled from each other.

With reference to FIG. 1, the nozzle ring 38 has a radially inwardly facing surface 39 that is radially spaced from a radially outwardly facing surface 21 of the center housing 20. A locator ring 90 is captively retained between the nozzle ring 38 and the center housing 20 when the cartridge is installed with the center housing. The locator ring 90 has a C-shaped cross-section and has a radially inner surface that engages the radially outwardly facing surface 21 of the center housing 20 so as to establish substantial concentricity between the center housing and locator ring. The radially outer surface of the locator ring 90 engages the radially inwardly facing locating surface 39 of the nozzle ring 38 so as to radially locate the nozzle ring substantially concentric with the locator ring, and therefore with the center housing. In this manner, the concentricity of the nozzle ring 38 with respect to the center housing (and therefore with respect to the turbine wheel 22) is established. Thus, as long as the insert 52 is substantially concentric with the nozzle ring 38, then the turbine flow path contour defined by the insert 52 will be substantially concentric with the turbine wheel, independent of the turbine housing 24.

The turbine housing 24 has an annular radially inwardly extending projection 70 that engages the surface of the nozzle ring 38 facing axially toward the insert 52. The engagement between the projection 70 and the nozzle ring 38 preferably is along a full 360° circumference of the nozzle ring so as to substantially seal the interface between the turbine housing and the nozzle ring. The projection 70 also assists the spacers in restraining the nozzle ring with respect to axial movement in the direction toward the insert 52. Advantageously, the turbine housing 24 has a radially inner surface facing toward a radially outer surface of the nozzle ring 38, and the turbine housing surface is greater in diameter than the nozzle ring surface such that there is a gap 76 between these surfaces. The gap 76 accommodates radial displacement of the nozzle ring relative to the turbine housing, such as may occur through differential thermal growth or other causes. This provides an effective stress decoupling of the variable vane cartridge 50 from the turbine housing.

The cartridge 50 includes a composite heat shroud 80 that is captively retained between the nozzle ring 38 and the center housing 20 when the cartridge is installed into the turbine housing 24. The heat shroud 80 provides sealing between the nozzle ring and center housing to prevent hot exhaust gas from migrating between these parts into the cavity in which the vane arms and unison ring 42 are disposed, and also serves an important role in resiliently biasing the nozzle ring 38 away from the center housing. The heat shroud 80 comprises a generally annular member, and the shroud is configured so that it is compressed in the axial direction between the nozzle ring 38 and the center housing 20 so that the restoring force of the shroud urges the shroud firmly against surfaces of the nozzle ring and center housing to substantially seal against these surfaces. In particular, as shown in FIG. 1, the heat shroud 80 has a radially outer portion that engages a surface of the nozzle ring that faces axially toward the center housing, and a radially inner portion that engages a surface of the center housing that faces axially toward the nozzle ring. These surfaces of the nozzle ring and center housing compress and elastically deform the heat shroud 80 between them.

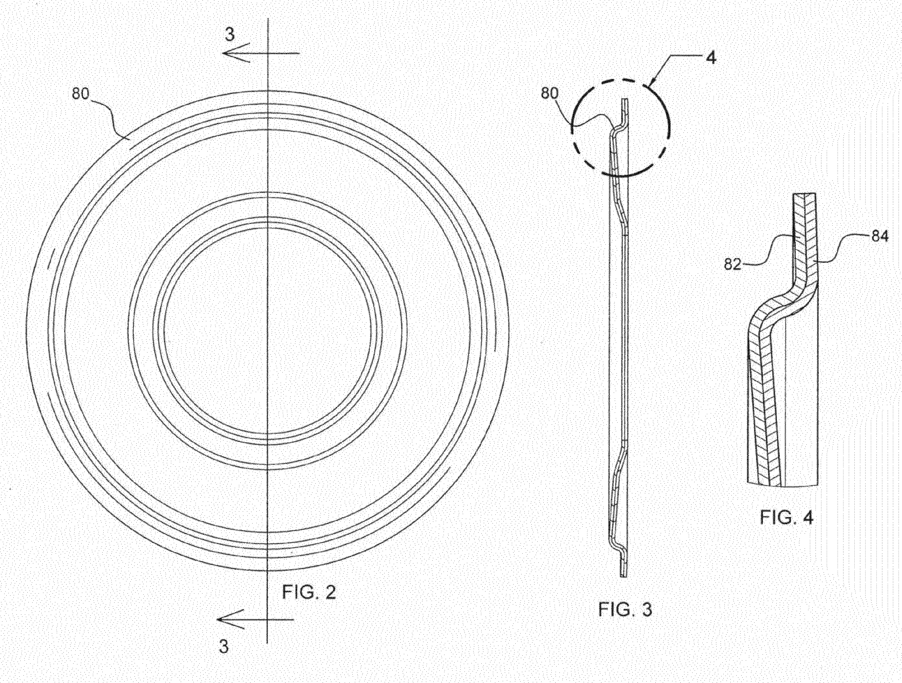

With reference to FIGS. 2 through 4, in accordance with the invention, the heat shroud is constructed and arranged such that heating of the shroud causes a deformation of the shroud that actually increases the preload, or axial biasing force, on the shroud. In one embodiment the heat shroud comprises a two-layer composite structure having a first layer 82 and a second layer 84. The material of which the first layer 82 is formed is different from the material of which the second layer 84 is formed. In particular, these two different materials have different coefficients of thermal expansion. The two layers 82 and 84 are joined together and are mutually configured so that heating of the shroud 80 leads to deformation of the shroud that causes the preload of the shroud between the center housing and nozzle ring to increase. The invention is not limited to any particular materials for the layers 82 and 84. Persons skilled in the art, on the basis of the present disclosure, are well able to select suitable materials for the high-temperature environment and which have the desired differential in thermal expansion coefficient so as to function in the intended manner.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A turbocharger having a variable-nozzle turbine, comprising:
a turbine assembly comprising a turbine housing and a turbine wheel mounted in the turbine housing and connected to a rotatable shaft for rotation therewith, the turbine housing defining a chamber surrounding the turbine wheel for receiving exhaust gas and for supplying the exhaust gas to the turbine wheel, the turbine assembly defining an axially extending bore;
a compressor assembly comprising a compressor housing and a compressor wheel mounted in the compressor housing and connected to the rotatable shaft for rotation therewith;
a center housing connected between the compressor housing and the turbine housing;
a cartridge connected between the center housing and the turbine housing, the cartridge comprising an assembly of:
a generally annular nozzle ring and an array of circumferentially spaced vanes rotatably mounted to the nozzle ring, each vane being connected to a rotatable actuator ring such that rotation of the actuator ring rotates the vanes for regulating exhaust gas flow to the turbine wheel;
an insert having a tubular portion sealingly received into the bore of the turbine housing and having a nozzle portion extending generally radially out from one end of the tubular portion, the nozzle portion being axially spaced by a plurality of spacers from the nozzle ring such that the vanes extend between the nozzle ring and the nozzle portion; and
an elastically deformable, composite heat shroud disposed between the nozzle ring and the center housing, the heat shroud being elastically deformed under an axial preload between the nozzle ring and center housing, wherein the heat shroud is constructed and arranged such that, upon heating, the heat shroud deforms so as to increase the axial preload.

2. The turbocharger of claim 1, wherein the heat shroud comprises a two-layer construction in which the two layers are respectively formed of two different materials having different coefficients of thermal expansion.

3. The turbocharger of claim 2, wherein the two layers are affixed to each other.
